# EUROPEAN PATENT APPLICATION

(11) **EP 2 464 080 A2**
(43) Date of publication of application: **13.06.2012**
(21) Application number: 11009731.8
(22) Date of filing: 09.12.2011
(51) Int. Cl.: H04L 29/06

(54) **Method of handling access control for software and application control management object client**

(30) Priority: 09.12.2010 US 42121410 P
(71) Applicant: HTC Corporation, Taoyuan County 330 (TW)
(72) Inventor: Yu, Chun-Ta, Taoyuan City Taoyuan County 330 (TW); Tseng, Yin-Yeh, Taoyuan City Taoyuan County 330 (TW)
(74) Representative: Schmidbauer, Andreas Konrad

(57) **Abstract**

A method of handling access control for a software and application control management object (SACMO) client is disclosed. The method comprises executing a transaction activated by a SACMO server; checking an access control list of a target node of a management object before executing the MO; and determining whether to execute the MO according to a checking result.

## Description

### Cross Reference To Related Applications

This application claims the benefit of U.S. Provisional Application No. 61/421,214, filed on Dec. 09, 2010 and entitled "Access Control in SACMO", the contents of which are incorporated herein in their entirety.

### Background of the Invention

### 1. Field of the Invention

The present invention relates to a method used in a service system, and more particularly, to a method of handling access control for a software and application control management object (SACMO) client.

### 2. Description of the Prior Art

Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

A device management (DM) protocol conforming to the OMA specifications is designed for management of mobile devices such as mobile phones, PDAs and palm top computers. The device management is intended to support the following typical uses: configuration of device for allowing changes to settings and parameters of the device, software upgrades for providing new software (e.g. applications and system software) and/or bug fixes to be loaded on the device, and fault management for reporting errors from the device, and/or querying about status of the device. In addition, the DM protocol defines a way according to which a DM client (e.g. mobile device) communicates with a DM server (e.g. network), and thereby the DM client can feedback a command, a status or a report to the DM server. Further, the DM server manages the DM client through a set of management objects in the DM client. The management object is conformed to a Software and Application Control Management Object (SACMO) specification, which aims to enable remote operations for software and application control in the device. SACMO specifications will provide capabilities of processing management actions such as workflow, processing or on device management of software and applications utilizing existing management objects. The SACMO architecture has to support DM operations to be applied according to workflow scripts in the device, whereby any combination of operations on existing Management Objects can be applied and conditionally executed, with just the combined result being reported back to the DM server.

The goal of SACMO is to enable DM operations to be applied according to workflow scripts in the device, whereby any combination of operations on existing Management Objects can be applied and conditionally executed, with just the combined result being reported back to the DM server. This avoids a series of individual client-server interactions, thereby optimizing the network traffic and reducing the workflow execution time.

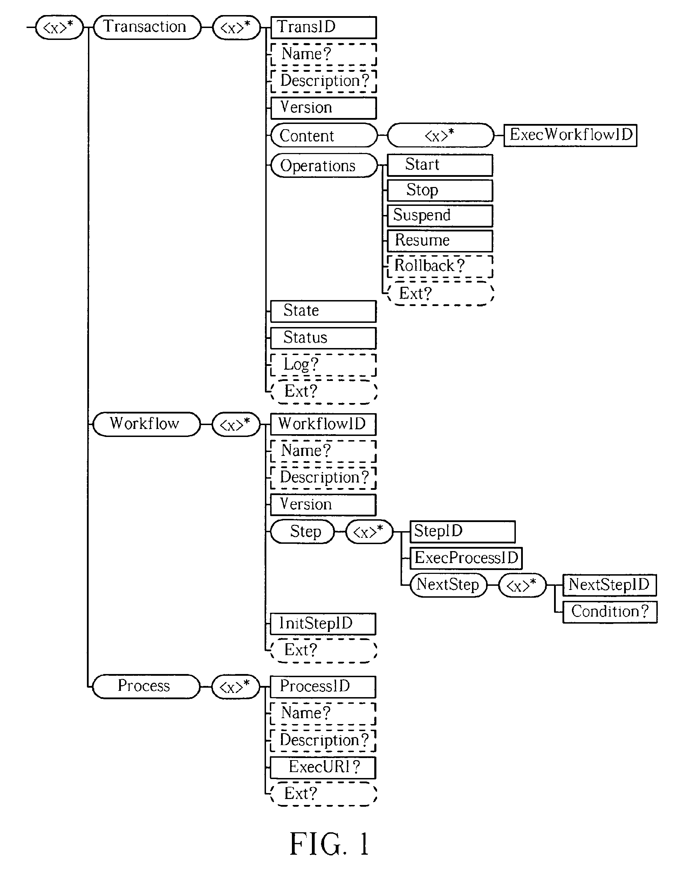

Please refer to FIG.1, which is a schematic diagram of a SACMO management object tree in the prior art. The state node in management object tree of SACMO is a leaf node to specify the state of a transaction. The SACMO management object tree is used for setting up parameters and operational functionality necessary for managing a workflow object. A workflow is a sequence of steps which is conditionally executed. Each step can be an operation, process, command or other type of resource. Between steps, a condition is used to determinate the next step. A Process is a basic unit for a specific operation execution. A Process consists of an URI path which indicates the node of target MO to execute. The Process is indicated by a unique Process ID and it can be reused in Workflows. A Step is a basic unit of a Workflow which consists of a Process and information for the next Step(s). A Step MUST have a Process ID to indicate the Process to execute. If a Step is followed by another step, a next step subtree is created. The next step subtree may contain multiple next Steps. Each next Step has a NextStepID to indicate the following Step and optionally a condition. The SACMO Client checks the condition, if the condition is passed, and then the next step will be executed. A transaction is an instance of a Workflow execution. A SACMO Server may retrieve result of the Transaction execution from status node under the Transaction tree.

An access control list (ACL) property has some unique characteristics when compared to the other properties. The access rights granted by an ACL are granted to server identifiers and not to the URI, IP address or certificate of a DM Server. The server identifier is an OMA DM specific name for a server. A management session is associated with a DM Server Identifier through OMA DM authentication. All management commands received in one session are assumed to originate from the same DM Server.

In current design in SACMO, a path which points to a target management object (MO) node for execution is stored in an ExecURI node under a SACMO sub-tree. When a Process under SACMO sub-tree is executed, the corresponding MO operation stored under this Process sub-tree will be executed without checking the Access Control List (ACL). With this drawback, a Server can control a MO even if it is not in the MO's ACL.

For example, Server A created a MO in a client and set its identity of the Server (ServerID) in the ACL list. This means that only Server A can perform a management operation on this MO. However, Server B can perform a management operation on this MO by creating a SACMO MO on the same client and setting a path which points to that MO in the ExecURI node. This is a serious security problem.

### Summary of the Invention

The disclosure therefore provides a method of handling access control for a software and application control management object (SACMO) client.

A method of handling access control for a software and application control management object (SACMO) client is disclosed. The method comprises executing a transaction activated by a SACMO server; checking an access control list of a target node of a management object before executing the MO; and determining whether to execute the MO according to a checking result.

A method of handling access control in a SACMO client is disclosed. The method comprises receive a work flow from a SACMO server; and checking whether an identity of the SACMO server is in an access control list of a target node of each of the plurality of management objects.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a SACMO management object tree in the prior art.

FIG.2 is a schematic diagram of an exemplary service system.

FIG.3 is a schematic diagram of an exemplary communication device.

FIG.4 is a flowchart of an exemplary process.

FIG.5 is a flowchart of an exemplary process. Detailed Description

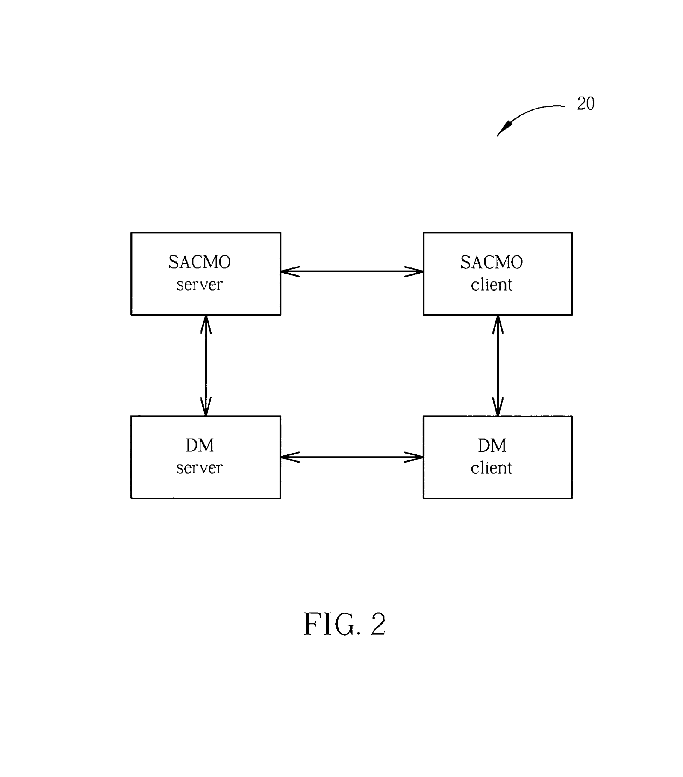

Please refer to FIG.2, which is a schematic diagram of a service system 20 according to an example of the present disclosure. The service system 20 complies with an Open Mobile Alliance (OMA) Device Management (DM) protocol and is briefly composed of a Software and Application Control Management Obj ect (SACMO) server, a DM server, a DM client and a SACMO client. The SACMO server is a logical entity which is dedicated to issue SACMO operations to the device or consumes the SACMO alerts from the device. The SACMO client is responsible for executing SACMO operations. The SACMO client manages the SACMO delivered to the device and is expected to relay SACMO Alerts conveying a success or failure result back to the SACMO Server. The SACMO architecture requires the DM server component to support device discovery, determination of an appropriate software and application control management obj ect and delivery of a software and application control management object to the device. The DM client provides an interface to the SACMO client to exchange SACMO data with the DM server by DM protocol.

The SACMO server delivers a workflow with a unique WorkflowID to the SACMO client. The SACMO Server executes the workflow by activating a transaction in the SACMO Client. The SACMO server activates the transaction by sending an Exec command to the Start node of the transaction sub-tree in the SACMO client. The DM server can create a management object (MO) in the DM client and sets its ServerID in an access control list (ACL) of the MO. The MO is a logical collection of related nodes that enables the targeting of management operations, using OMA DM protocol commands. Each node in the MO can be as small as an integer or large and complex like a background picture or screen saver.

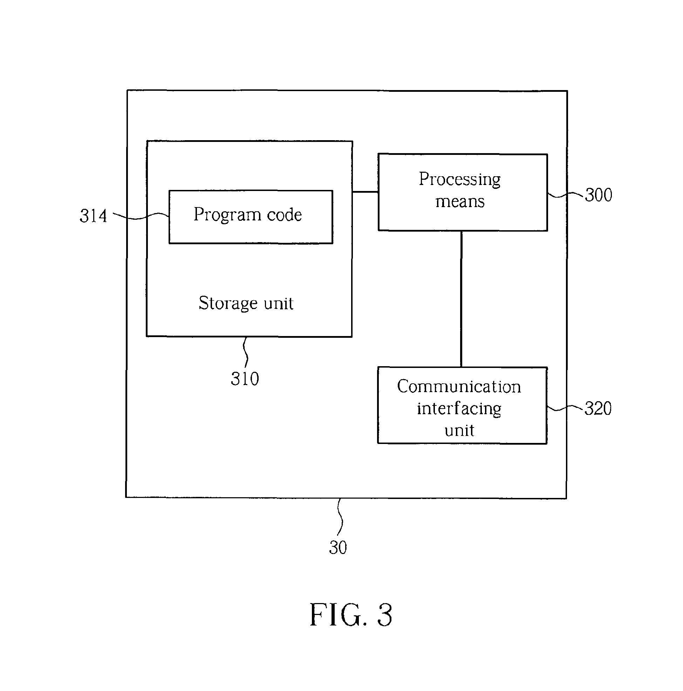

Please refer to FIG.3, which is a schematic diagram of a communication device 30 according to an example of the present disclosure. The communication device 30 can be the SACMO server or the SACMO client shown in FIG.2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a transceiver and can exchange signals with the server according to processing results of the processor 300.

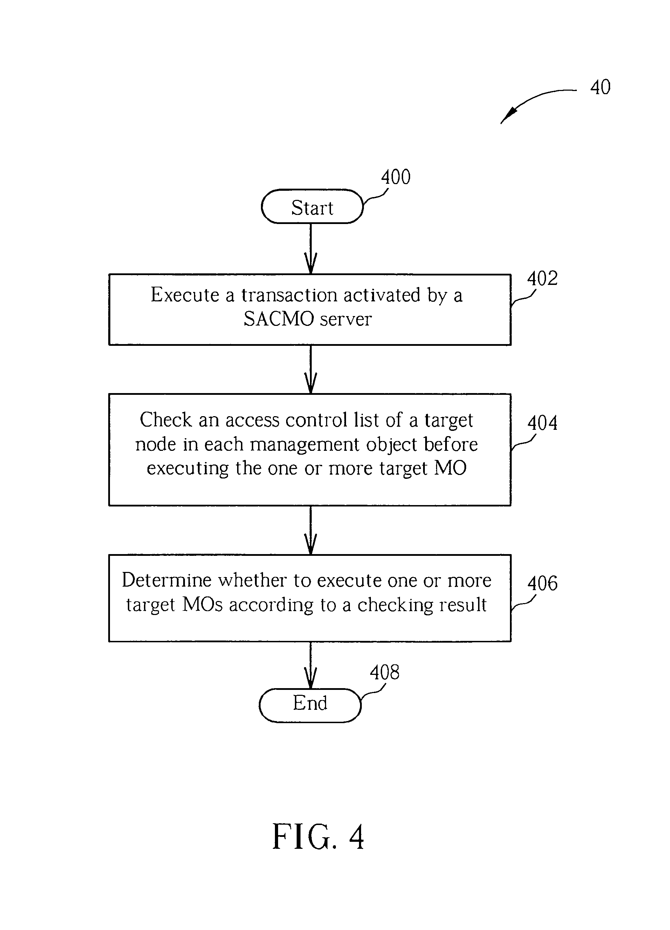

Please refer to FIG.4, which is a flowchart of an exemplary process 40. The process 40 is used for handling access control for the SACMO client shown in FIG.2. The process 40 may be compiled into the program code 314 and includes the following steps:

Step 400: Start.

Step 402: Execute a transaction activated by a SACMO server.

Step 404: Check an access control list (ACL) of a target node in each management object (MO) before executing one or more target MOs.

Step 406: Determine whether to execute one or more target MOs according to a checking result.

Step 408: End.

According to the process 40, the SACMO server activates the transaction for the SACMO client. A path which points to the target node for execution is stored in a ExecURI node under a SACMO process sub-tree. The target node is referred from the ExecURI node under the Process sub-tree which is invoked in a workflow. The SACMO client checks the ACL of a target node in each MOs before executing one or more target MOs when executing the transaction. Then, the SACMO client determines whether to execute one or more target MO accoridng to the checking result. If the checking result indicates a identity of the SACMO server is not in the ACL of the target node of the MO, the SACMO client does not execute that target MO. In other words, the SACMO client executes the target MO only when the identity of the SACMO server is in the ACL of the target node of the MO. As a result, the SACMO client can prevent another SACMO server whose identity is not in the ACL of the target node of each MO from executing the target MO.

In some examples, the SACMO client skips executing the target MO when the checking result indicates the identity of the SACMO server is not in the ACL of the target node of the MO and continues the workflow of the transaction. In some examples, the SACMO does not execute the target MO when the checking result indicates the identity of the SACMO server is not in the ACL of the target node of the MO and then SACMO stops executing the workflow of the transaction.

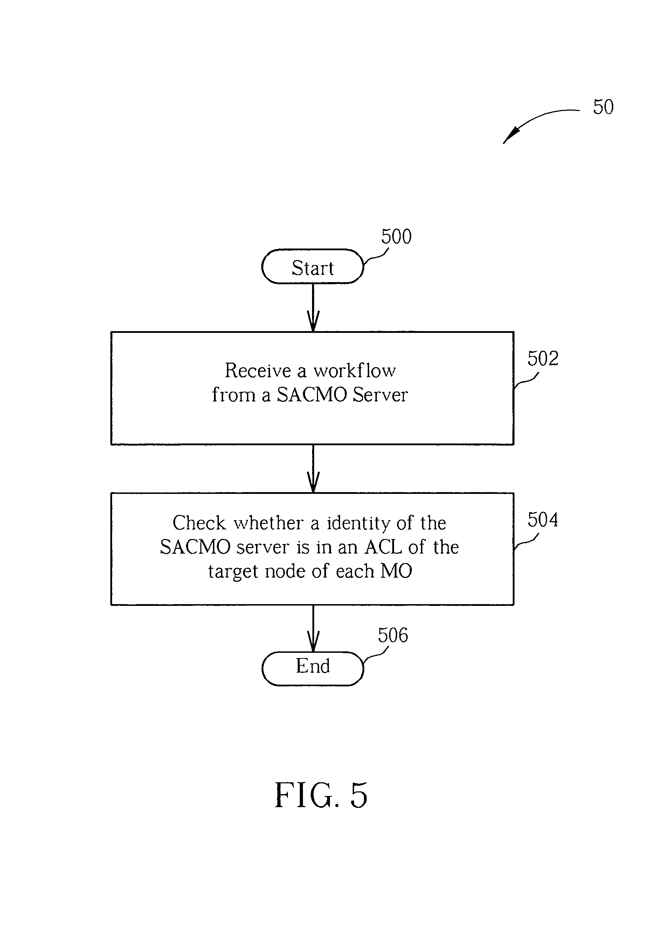

Please refer to FIG.5, which is a flowchart of an exemplary process 50. The process 50 is used for handling access control for the SACMO client shown in FIG. 2. The process 50 may be compiled into the program code 314 and includes the following steps:

Step 500: Start.

Step 502: Receive a workflow from a SACMO Server.

Step 504: Check whether a identity of the SACMO server is in an ACL of the target node of each MO.

Step 506: End.

According to the process 50, the SACMO client receives the work flow from the SACMO server. The SACMO client checks whether the identity of the SACMO server is in an ACL of the target node of each MO. The SACMO client does not create the workflow when the identity of the SACMO server is not in the ACL of the target node of any target MO. In other words, the SACMO client checks whether the identity of the SACMO server exists in any of ACLs of target nodes of target MOs before creating the workflow. If the SACMO client can not find the identity in any ACL of target nodes of the target MOs, the SACMO client does not create the workflow. As a result, a security problem can be avoided.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

To sum up, the SACMO client checks an ACL of the target node of each MO before executing one or more target MO. If the identity of the SACMO server is not in the ACL of the target node of the MO, the SACMO client does not execute the target MO. In another example, the SACMO client checks whether an identity of the SACMO server is in an ACL of the target node of each MO before creating the workflow. If the identity of the SACMO server is not in any ACL of target nodes, the SACMO client does not create the workflow.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling access control for a software and application control management object (SACMO) client, the method comprising:
executing a transaction activated by a SACMO server; checking an access control list of a target node of a
management object before executing the MO; and determining whether to execute the MO according to a checking result.

2. The method of claim 1, wherein determining whether to execute the MO according to the checking result comprise executing the MO only when the checking result indicates an identity of a SACMO server is in the access control list.

3. The method of claim 1, wherein determining whether to execute the MO according to the checking result comprises:
skipping executing the MO when the checking result indicates
an identity of the SACMO server is not in the access control list; and
continuing a workflow of the transaction.

4. The method of claim 1, wherein determining whether to execute the MO according to the checking result comprises:
not executing the MO when the checking result indicates an
identity of the SACMO server is not in the access control list; and
stopping executing a workflow of the transaction.

5. The method of claim 1, wherein determining whether to execute the MO according to the checking result comprises:
not executing the MO when the checking result indicates an
identity of the SACMO server is not in the access control list; and
stopping executing the transaction.

6. A method of handling access control in a software and application control management object (SACMO) client, the method comprising:
receive a workflow from a SACMO server; and
checking whether an identity of the SACMO server is in an
access control list of a target node of each of the plurality of management objects.

7. The method of claim 6 further comprising not creating a workflow when the identity of the SACMO server is not in the access control list of the target node of any of the plurality of management objects.
